# FASCICULE DE BREVET EUROPEEN

(11) **EP 1 620 769 B1**
(45) Date de publication et mention de la délivrance du brevet: **03.12.2008**
(21) Numéro de dépôt: 04742561.6
(22) Date de dépôt: 22.04.2004
(51) Int. Cl.: G05B 23/02

(54) **SYSTEME DE MESURES ET D ANALYSES POUR INSTALLATIONS CLASSEES EMETTANT DES POLLUANTS.**
MESS- UND ANALYSESYSTEM FÜR VERUNREINIGUNGEN EMITTIERENDE INSTALLATIONEN
MEASUREMENT AND ANALYSIS SYSTEM FOR POLLUTANT-EMITTING INSTALLATIONS

(30) Priorité: 07.05.2003 FR 0305567
(43) Date de publication de la demande: 01.02.2006
(73) Titulaire: Elyo, 92000 Nanterre (FR)
(72) Inventeur: ARCHENAULT, Martial, F-69009 LYON (FR); CHATRE, Michel, F-69005 LYON (FR)
(74) Mandataire: Michardière, Bernard
(86) Numéro de dépôt international: PCT/FR2004/000986
(87) Numéro de publication internationale: WO 2004/102441

(56) Documents cités:
- EP-A- 1 160 710
- WO-A-02/066974
- FR-A- 2 806 182
- US-A1- 2002 065 581

## Description

La présente invention concerne un système de mesures et d'analyses en continu pour des installations et usines classées, en vue d'émettre des rapports d'exploitation de ces installations susceptibles de déceler des fonctionnements défectueux.

On sait que les installations classées, c'est-à-dire des installations susceptibles d'émettre des polluants, par exemple sous la forme de rejets gazeux, sont soumises à des réglementations les obligeant à s'équiper de moyens de mesures en continu et de systèmes de traitements de données conçus de façon à émettre des rapports d'exploitation permettant de vérifier que les limites d'émission des polluants vers l'environnement sont bien respectées.

Le document FR 2 806 182, décrit un système de mesure et d'analyse en continu pour installations ou usines classées, notamment des installations émettant des polluants telles que des usines de combustion émettant des rejets gazeux qui comprend des capteurs et des analyseurs délivrant des mesures brutes des données de fonctionnement de l'installation telles que notamment émission de polluants, sous la forme de signaux analogiques, des moyens de traitement des signaux représentatifs des mesures brutes pour les transformer en mesures corrigées, notamment en vue de ramener les mesures aux conditions normales réglementaires, des moyens de traitement et d'exploitation des mesures corrigées en vue d'éditer des rapports d'exploitation.

Les systèmes d'analyses et de mesures utilisés actuellement dans ce but comportent des capteurs et des analyseurs qui sont conçus de façon à délivrer des mesures brutes relatives aux données d'exploitation, ces mesures étant émises sous la forme de signaux analogiques ou numériques. Ces signaux doivent ensuite être traités afin de permettre l'édition de rapports d'exploitation.

Dans ce but, dans les installations actuellement connues, les mesures brutes provenant des capteurs et analyseurs, doivent suivre une chaîne de traitement particulier à la métrologie des données d'exploitation (dans l'exemple d'application mentionné ci-dessus il s'agit des rejets gazeux de l'installation) que l'on résumera par « corrections ». Ces corrections transforment les mesures brutes en mesures dites « corrigées ». Par exemple, les corrections peuvent consister à valider ou invalider une mesure, rapporter la mesure aux conditions normales en la compensant en oxygène, température, pression, humidité etc..., à la transformer à l'aide d'une fonction de calibrage etc...

Il faut ensuite exploiter les mesures corrigées afin d'éditer des rapports d'exploitation selon les procédures exigées par les réglementations en vigueur. Ces procédures compilent les mesures corrigées et les exploitent en suivant un traitement statistique particulier. Ces procédures peuvent consister par exemple à vérifier que, sur une année glissante, 97%.des moyennes semi-horaires effectuées à partir de mesures validées pendant les phases de fonctionnement d'une ligne de l'installation sont inférieures à une valeur limite d'émission de polluants. Ce traitement spécifique et. complexe est effectué, dans les installations selon la technique antérieure, à l'aide d'un système de traitement de données de mesures environnementales (STDME). Ce système convertit les mesures corrigées en rapports d'exploitation qui peuvent se présenter soit sous la forme de documents papiers soit sous la forme de documents électroniques.

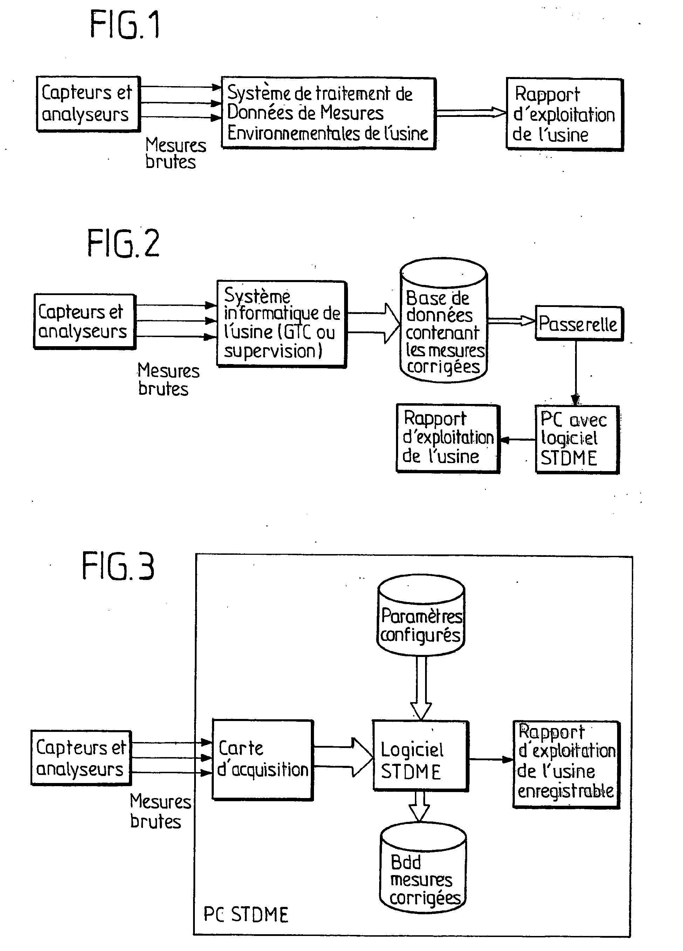

Ce système selon la technique antérieure est illustré sous la forme d'un organigramme simplifié sur la figure 1 des dessins annexés.

Les systèmes de traitement mis en oeuvre à l'heure actuelle dans les installations ou usines classées sont essentiellement les suivants :
A) Système dans lequel un logiciel spécifique est connecté sur le système informatique de l'usine (système de supervision de l'usine). Un tel système est illustré par la figure 2 des dessins annexés. Ainsi qu'on le voit sur cette figure, les mesures brutes sont traitées par le système de supervision de l'usine qui assure les corrections transformant les mesures brutes en mesures corrigées, ces dernières étant ensuite stockées dans une base de données de l'usine. Dans cet exemple de réalisation, le système de traitement de données de mesures environnementales (STDME) est constitué d'un logiciel qui est exploité sur un ordinateur du type PC et d'une liaison (passerelle informatique) entre le PC et le système de supervision de l'usine. La passerelle assure la transmission des mesures corrigées au PC qui traite ces mesures afin d'émettre les rapports d'exploitation.
   Un tel système présente les avantages suivants :
   - économie d'installation compte tenu du fait que l'achat d'un module d'enregistrement est inutile et,
   - les mesures affichées en supervision sont les mêmes que celles utilisées par le logiciel du STDME.

   Par contre ce système présente les inconvénients suivants :
   - les corrections ne sont pas centralisées sur le logiciel du STDME, ce qui nuit à la traçabilité du traitement et dilue la responsabilité des erreurs de correction éventuelles ;
   - la sauvegarde des données est assurée par le système informatique de l'usine ou son système de supervision et le STDME ne peut être garant de la protection de ces données et
   - la fiabilité de la passerelle informatique entre le système de supervision et le STDME conditionne la disponibilité des mesures.
B) Système comportant une carte d'acquisition. Dans un tel système, illustré par la figure 3 des dessins annexés, les mesures brutes provenant des capteurs et analyseurs, sont obtenues à l'aide d'une carte d'acquisition analogique ou numérique de l'ordinateur PC du STDME. Les mesures brutes sont converties au niveau du PC puis enregistrées. Le logiciel du STDME dispose d'un module permettant de rédiger les rapports d'exploitation à partir des mesures corrigées. Les paramètres configurant les corrections ainsi que les rapports d'exploitation sont stockés dans une même base de données de l'ordinateur PC. Les rapports d'exploitation peuvent être enregistrés après édition.

Un tel système connu présente les avantages suivants :
- concentration des traitements et des bases de données dans le PC STDME ce qui fait que le système est responsable de l'intégrité des corrections et des traitements et
- possibilité d'afficher en temps réel les mesures.

Par contre les inconvénients d'un tel système sont les suivants :
- la fiabilité de l'acquisition des données (mesures brutes) dépend de la disponibilité du PC. En cas de panne de ce dernier ou d'arrêt de fonctionnement du logiciel ou du système d'exploitation, les données sont perdues et
- il n'existe pas de possibilité de refaire les calculs de correction lesquels sont effectués en temps réel au moment de l'acquisition des mesures brutes.

Partant de cet état antérieur de la technique, la présente invention se propose d'apporter un système ne présentant pas les inconvénients des solutions antérieures mentionnées ci-dessus, tout en en conservant les avantages.

En conséquence cette invention concerne un système de mesure et d'analyse en continu pour installations ou usines classées, notamment des installations émettant des polluants telles que des usines de combustion émettant des rejets gazeux qui comprend :
- des capteurs et des analyseurs délivrant des mesures brutes des données de fonctionnement de l'installation telles que notamment émission de polluants, sous la forme de signaux analogiques ;
- des moyens de traitement des signaux représentatifs des mesures brutes pour les transformer en mesures corrigées, notamment en vue de ramener les mesures aux conditions normales réglementaires ;
- des moyens de traitement et d'exploitation des mesures corrigées en vue d'éditer des rapports d'exploitation ;
ce système étant caractérisé en ce qu'il comprend :
- un automate-enregistreur recevant les mesures brutes provenant des capteurs et des analyseurs, sous la forme de signaux analogiques et les transformant en signaux numériques avant de les enregistrer ;
- un ordinateur, relié à l'automate par une liaison série, mettant en oeuvre un logiciel pour traiter les mesures brutes numérisées qui lui sont transmises par l'automate-enregistreur, cet ordinateur comportant trois bases de données :
   ■ une base de données de correction contenant tous les paramètres, configurables, servant à transformer les mesures brutes en mesures corrigées,
   ■ une base de données (base de données mesures) contenant les mesures brutes et corrigées,
   ■ une base de données (base de données rapports) contenant tous les paramètres, configurables, permettant d'éditer des rapports d'exploitation à partir des mesures corrigées ;
- et des moyens permettant d'éditer des rapports d'exploitation à partir des paramètres configurés et stockés dans la base de données rapports.

Selon un mode de réalisation de l'objet de l'invention, l'automate-enregistreur comprend :
- un module d'acquisition recevant les signaux provenant des capteurs et analyseurs ;
- un module d'enregistrement et de conversion dans lequel les signaux analogiques provenant des capteurs et analyseurs sont échantillonnés puis convertis en signaux numériques représentant les mesures brutes, cette conversion étant effectuée d'après les paramètres de configuration adressés à l'automate par le logiciel et,
- une mémoire dans laquelle sont stockés les échantillons de mesures brutes devant être ensuite transférés, par la liaison série, audit ordinateur.

D'autres caractéristiques et avantages de la présente invention ressortiront de la description faite ci-après en référence aux dessins annexés qui en illustrent des exemples de réalisation et d'application non limitatifs. Sur les dessins :
- les figures 1 à 3 sont des organigrammes illustrant les solutions selon l'état antérieur de la technique décrit ci-dessus,
- la figure 4 est un schéma, sous forme d'organigramme illustrant un mode de réalisation de l'invention,
- la figure 5 est un schéma, similaire à celui de la figure 4, explicitant le déroulement du traitement des données dans un exemple de mise en oeuvre de l'invention,
- la figure 6 est un schéma similaire à celui de la figure 5 explicitant le déroulement du traitement des données dans une application particulière et
- les figures 7a et 7b illustrent un exemple de rapport d'exploitation obtenu grâce à l'invention.

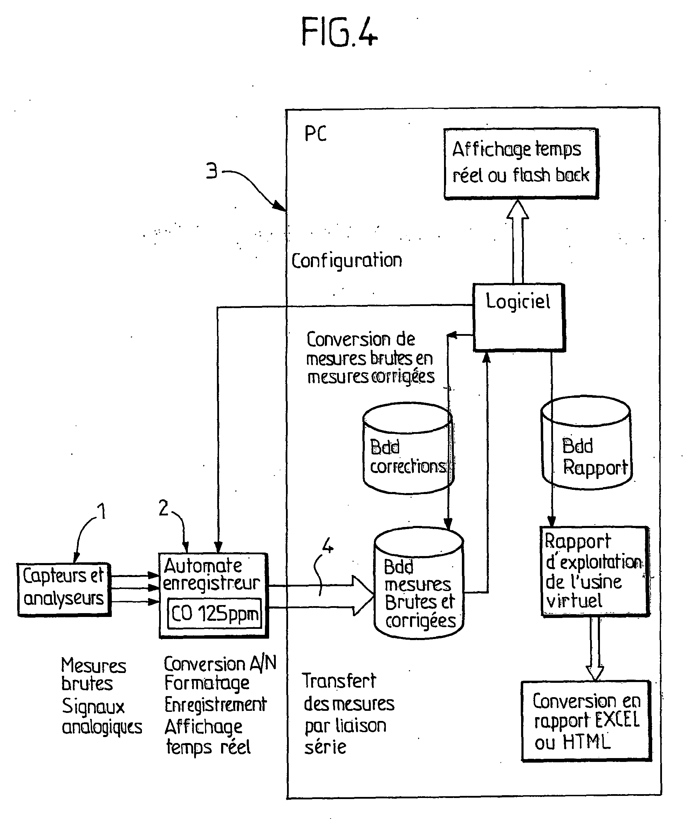

En se réfère tout d'abord à la figure 4 sur laquelle on voit que le système objet de la présente invention comprend, comme connu, des capteurs et des analyseurs 1 délivrant des mesures brutes des données de fonctionnement de l'installation dont on veut obtenir des rapports d'exploitation, ces données pouvant être par exemple relatives aux rejets polluants, notamment gazeux, de cette installation. Ces données sont obtenues sous la forme de signaux analogiques.

Selon la présente invention, le système comprend en outre un automate-enregistreur 2, un ordinateur 3 du type PC avec son logiciel propre à l'invention, la liaison entre l'ordinateur 3 et l'automate 2 étant assurée par une liaison informatique 4, du type série. L'automate-enregistreur 2 assure l'acquisition des données de mesures brutes obtenues à l'aide des capteurs et analyseurs 1 pour les transmettre, après traitement comme spécifié ci-après, à l'ordinateur 3 dont le logiciel permet d'éditer les rapports de fonctionnement.

L'automate 2 comporte un module d'acquisition qui convertit les signaux analogiques provenant des analyseurs et des capteurs, ces signaux étant ensuite échantillonnés puis convertis en signaux numériques représentant les mesures brutes, cette conversion étant effectuée dans un module d'enregistrement et de conversion de l'automate, d'après les paramètres de configuration adressés à l'automate par le logiciel de l'ordinateur 3. L'automate comporte en outre une mémoire dans laquelle sont stockés les échantillons de mesures brutes qui sont ensuite transférés, par la liaison série 4 à l'ordinateur 3.
Ainsi le module d'acquisition de l'automate-enregistreur 2 convertit les signaux analogiques ou logiques provenant des mesures réalisées par les analyseurs et les capteurs 1 et ces signaux sont échantillonnés et numérisés par l'automate. L'échantillonnage peut s'effecteur selon deux modes :
- 1) enregistrement d'un signal toutes les deux secondes : le module d'enregistrement calcule une moyenne, par exemple, sur les 600 dernières acquisitions et enregistre une moyenne horodatée, par exemple, toutes les 5 minutes ;
- 2) enregistrement d'une valeur instantanée et horodatée, par exemple, toutes les minutes.

Les échantillons sont enregistrés sous la forme de nombres à 8 bits horodatés, après conversion du signal électrique en valeur brute. Cette conversion s'effectue automatiquement par le module d'enregistrement de l'automate-enregistreur 2, d'après les paramètres de conversion adressés, par le logiciel de l'ordinateur 3, à l'automate (échelle, unité, numéro de la voie). Une mesure peut être enregistrée sur plusieurs voies de l'automate 2.
L'automate 2 comporte une mémoire permettant d'enregistrer toutes les mesures brutes, par exemple les mesures horodatées sur une période d'un mois. Cette disposition permet d'éviter toute perte de mesures en cas d'incident tel que panne de l'ordinateur ou arrêt de son système d'exploitation. Ceci confère au système une très grande sécurité d'informations et une fiabilité qui est très supérieure à celle des systèmes selon l'état antérieur de la technique, qui sont fragilisés par les dysfonctionnements informatiques éventuels.
L'automate 2 est de préférence doté d'un panneau afficheur qui permet de visualiser les mesures brutes obtenues en temps réel à partir des capteurs et analyseurs 1. Ainsi l'opérateur peut à tout moment consulter les mesures, sur un point de l'installation, avant tout traitement. L'automate-enregistreur 2 est relié à l'ordinateur 4 par une liaison série spécialisée assurant le transfert des mesures. Cet ordinateur 4 est équipé d'un logiciel qui pilote trois bases de données spécifiques :
- une base de données (dite base de données de corrections) qui contient tous les paramètres, configurables, servant à transformer les mesures brutes en mesures corrigées ;
- une base de données (dite base de données mesures) qui contient les mesures brutes et les mesures corrigées ;
- une base de données (dite base de données rapports) qui contient tous les paramètres, configurables, permettant d'éviter des rapports d'exploitation de l'installation, à partir des mesures corrigées.

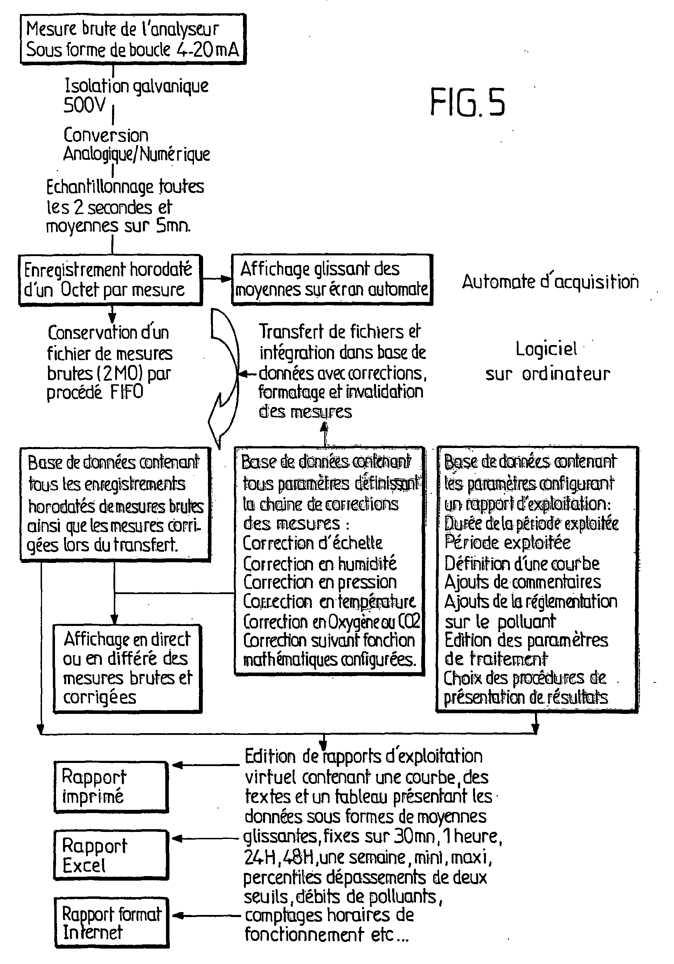

Le fonctionnement qui est explicité par le schéma de la figure 5, s'effectue selon le processus ci-après :
Acquisition au niveau de l'automate-enregistreur 2 des signaux analogiques des mesures brutes obtenus à partir des capteurs et analyseurs 1, puis numérisation de ces signaux.

Conversion de ces signaux en mesures brutes échantillonnées en fonction de paramètres de configuration (notamment échelle, unité) adressés à l'automate-enregistreur par l'ordinateur 3 et enregistrement des échantillons de mesures brutes horodatés dans la mémoire de l'automate-enregistreur 2.

Transfert de chaque mesure brute, en temps réel, à l'ordinateur 4, par l'intermédiaire de la liaison série 4.

Le logiciel de l'ordinateur affiche en temps réel et en continu, avec les paramètres stockés dans la base de données de corrections, les mesures brutes ainsi que les mesures corrigées. L'opérateur voit ainsi en direct les mesures brutes transmises à l'ordinateur ainsi que le résultat des corrections obtenues grâce au logiciel de l'ordinateur et qui seront reprises dans le rapport d'exploitation qui sera finalement édité. Les chaînes de corrections comprennent aussi les validations des mesures. L'affichage des données comporte des systèmes d'alarme visuelle déclenchés lors de dépassement ou d'invalidité des mesures.

Les mesures brutes sont rapatriées sur l'ordinateur par une procédure de transfert qui peut être déclenchée manuellement par l'opérateur ou bien effectuée automatiquement grâce à une fréquence configurable. Pendant cette procédure de transfert, le logiciel utilise les paramètres stockés dans la base de données de corrections pour transformer les mesures brutes en mesures corrigées. Ces mesures brutes et corrigées sont ensuite stockées dans la base de données mesure.

Lors de son transfert de l'automate-enregistreur 2 à l'ordinateur 3 ou à toute autre étape de corrections des mesures, l'échantillon de mesure peut être invalidé par le logiciel, par exemple dans l'un quelconque des états suivants :
- signal brut hors échelle de mesure brute,
- courant de la boucle inférieur à la valeur requise,
- signal TOR en boucle ouverte et constitutif de la chaîne de correction d'une mesure : ce signal peut indiquer une alarme d'analyseur, un étalonnage etc...,
- mesure constitutive de la chaîne de correction invalide,
- mesure corrigée hors échelle de mesure corrigée.

L'invalidation des mesures peut être facilement repérée par une sortie d'échelle. Le logiciel de l'ordinateur permet de distinguer l'invalidité d'une mesure de la disponibilité de la ligne. Le fait que la mesure soit invalide signifie qu'elle ne peut pas être utilisée pour le traitement. Le fait qu'une ligne soit indisponible (à l'arrêt) signifie que certaines procédures relatives à cette ligne ne prennent pas en compte les mesures valides pendant cette période. Les moyennes sont constituées par exemple d'échantillons valides enregistrés pendant que la ligne est disponible.

Edition des rapports d'exploitation. Cette édition est réalisée selon des paramètres configurés et stockés dans la base de données rapports. Elle est déclenchée soit par l'opérateur soit de façon automatique à l'aide d'une fréquence programmable. Le résultat du rapport dépend des paramètres de configuration de la base de données rapports et des mesures corrigées qui sont stockées dans la base de données mesures. Bien entendu toute modification de l'une des bases de données change le résultat de l'édition du rapport.

En principe les rapports obtenus ne sont pas enregistrés. Ils peuvent imprimés et transférés en vue de leur conservation mais leur contenu ne dépend que de la configuration des différentes bases de données le jour de leur édition.

Dans le système selon l'invention, les paramètres configurables et enregistrés dans la base de données rapports peuvent être modifiés à tout moment. De même, il est possible de refaire les calculs convertissant les mesures brutes en mesures corrigées, à tout moment, à partir de nouvelles configurations de la base de données de corrections et à la demande de l'opérateur, sur une plage de temps configurable. Bien entendu dans ce cas, les nouvelles mesures corrigées sont enregistrées dans la base de données mesures, à la place des mesures corrigées anciennes. En aucun cas, les mesures brutes de cette base de données ne sont effacées ou remplacées.

L'opérateur peut afficher les nouvelles mesures brutes et corrigées, sur une plage de temps configurable et à une vitesse de défilement également configurable, avec le même interface graphique que celui de l'affichage en temps réel. Grâce à cette disposition, on peut visualiser les chaînes de traitements, les invalidations, les dépassements etc. Une telle procédure facilite la compréhension des rapports d'exploitation.

Compte tenu du fait que le système objet de l'invention assure une visualisation et une écriture des paramètres des bases de données rapports et corrections, utilisés lors des calculs et intervenant pour l'édition des rapports d'exploitation. On assure ainsi une transparence des traitements.

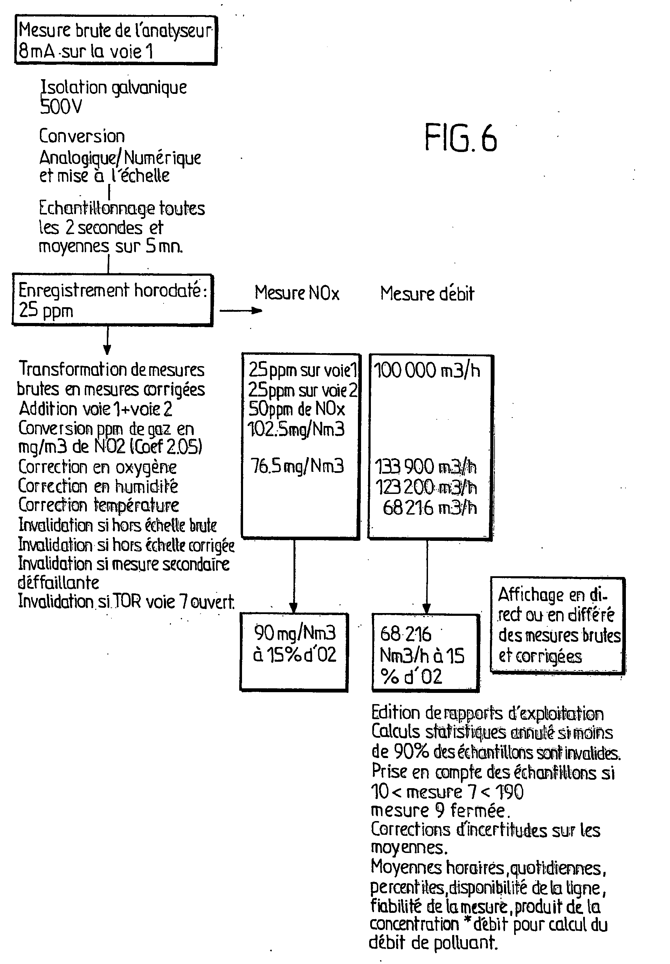

On donnera maintenant en exemple d'application du système objet de l'invention, cet exemple étant relatif à une mesure de concentration d'un polluant plus particulièrement de NOx sur une unité de cogénération. Le déroulement du traitement décrit ci-après, est illustré par l'organigramme de la figure 6.

### A) Cahier des charges

Le cahier des charges réglementaires exige (réglementation Grande installation de Combustion) :
→ de vérifier que la moyenne journalière est inférieure à 100 mg/Nm³ secs à 15% d'oxygène, exprimée en NO₂.
→ La moyenne journalière est constituée de semi horaires.
→ On ne peut pas faire de moyennes journalières si moins de 90% des échantillons nécessaires sont invalides.
→ Moyennes faites à partir d'échantillons enregistrés quand la ligne de cogénération est en fonctionnement.
→ 97% des moyennes semi horaires inférieurs à 110 mg/Nm³ secs à 15% d'oxygène.
→ L'arrêté d'exploitation exige que le flux de NO₂ soit inférieur à 5 kg/h.

### B) Signaux disponibles :

Mesures de NO en ppm (mesure sur air sec normalisé)
Mesure de NO₂ en ppm (mesure sur air sec normalisé)
Mesure d'oxygène fumées en %.
Signal Tout Ou Rien indiquant que la cogénération est en fonctionnement.
Signal Tout Ou Rien indiquant que l'analyseur fonctionne correctement et que la mesure est valide.
Signal analogique de pression vapeur.
Mesure de débit des gaz de combustion non normalisée.
Mesure de température des gaz.

### C) Configuration du module d'acquisition du système de l'invention

### Configuration pour acquisition de 30 voies

### Mesure NO

### Voie 1

Echelle brute 0-100
Unité brute : ppm
Référence NO Coge.

### Mesure NO2

### Voie 2

Echelle brute 0-100
Unité brute : ppm
Référence NO2 Coge.

### Mesure NOx

### Voie 3 virtuelle définie comme la somme de la voie 1 et de la voie 2.

Référence NOx Coge.

### Mesure Oxygène

### Voie 4

Echelle brute 0-25
Unité brute : %
Référence : 02 Coge.

### Débit gaz

### Voie 5

Echelle brute 0-100 000
Unité brute : m3/h
Référence Débit Coge.

### Température gaz

### Voie 6

Echelle brute 20-200
Unité brute : °C
Référence TempGaz

### Pression vapeur

### Voie 7

Echelle brute 0-300
Unité brute : B
Référence Pression vapeur

Signal TOR de fonctionnement de l'analyseur : voie 8
Signal TOR de fonctionnement de la ligne : voie 9

### D) Configuration de la base de données « Corrections » du système de l'invention

### Configuration pour acquisition de 30 voies

### Mesure NO

Echelle corrigée 0-210
Unité corrigée : mg/Nm3
Pas de correction en humidité, pression, température, correction en 02, automatique suivant la voie 4.
Mesure invalidée si ouverture du TOR de la voie 8.

### Mesure NO2

Echelle corrigée 0-210
Unité corrigée : mg/Nm3
Pas de correction en humidité, pression, température, correction en 02, automatique suivant la voie 4.
Mesure invalidée si ouverture du TOR de la voie 8.

### Mesure NOx

Echelle corrigée 0-200, seuil 1 : 100, seuil 2 : 110
Unité corrigée : mg/Nm3

### Mesure Oxygène,

Echelle corrigée 0-21, seuil 1 : 1, seuil 2 : 21.
Unité corrigée : %
Pas de correction en humidité, pression, température, en 02.

### Débit gaz

Echelle corrigée 0-100 000
Unité corrigée : Nm3/h
Correction automatique en oxygène suivant la voie 4, correction forfaitaire d'humidité à 8%, correction automatique en température suivant la voie 6.

### Température gaz

Echelle corrigée 20-200
Unité corrigée : °C
Aucune correction

### Pression vapeur

Echelle corrigée 0-200, seuil 1 : 10, seuil 2 : 190
Unité corrigée : Bars
Pas de correction.

Signal TOR de fonctionnement de l'analyseur : voie 8
Signal TOR de fonctionnement de la ligne : voie 9.

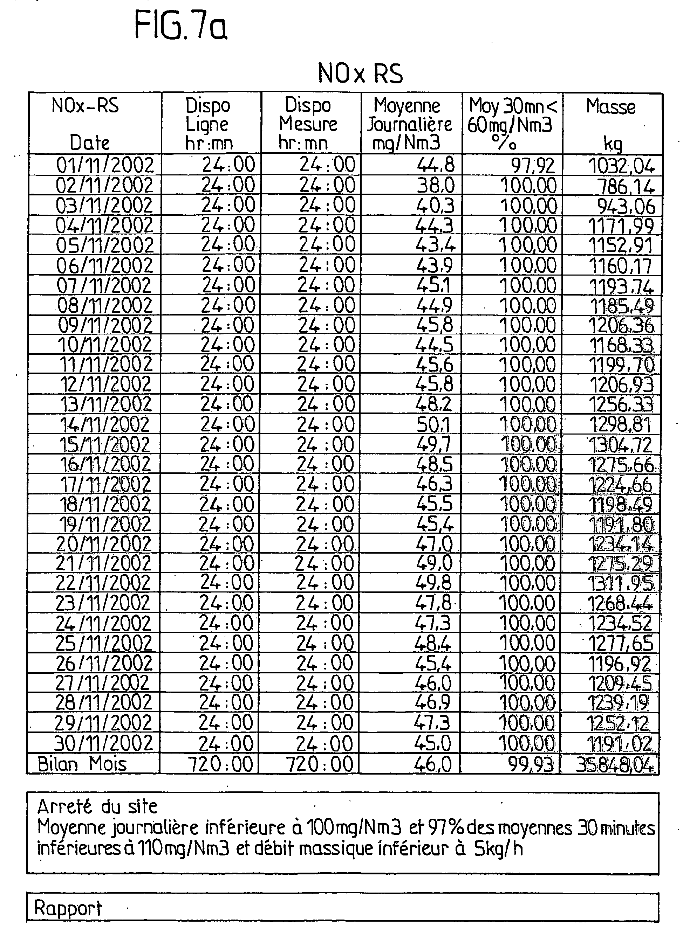

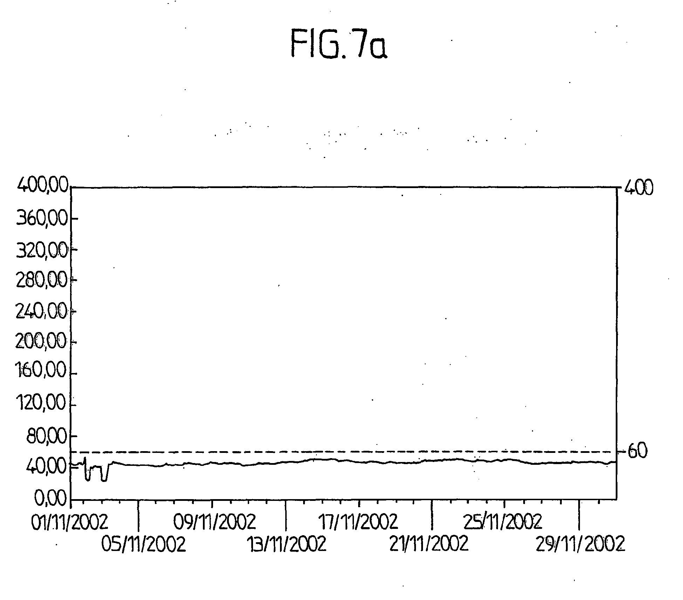

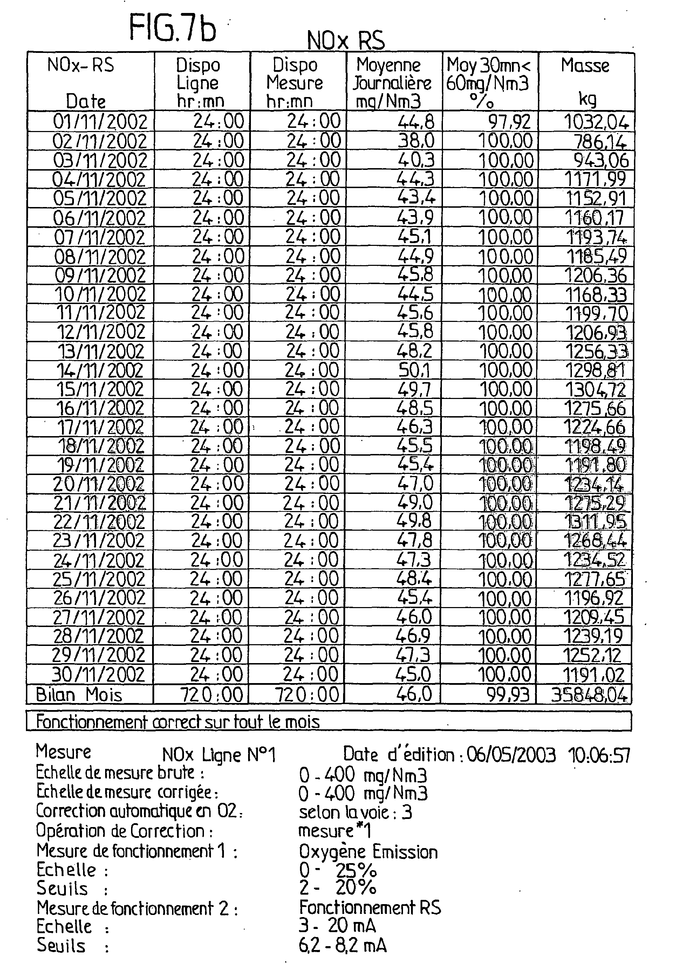

### E) Configuration du rapport d'exploitation : ce rapport d'exploitation est illustré par les figures 7a et 7b.

Rapport mensuel
Titre du rapport
Titre du bulletin
Choix du polluant : mesure de la voie 3
Déclenchement des corrections d'incertitude
Affichage des commentaires
Choix de paramètres fixant le fonctionnement de la ligne de cogénération : voie 7 et 9.
Calcul du débit de NOx à l'aide de la voie 5.
Procédures choisies : moyennes journalières, moyennes mensuelles, pourcentage de moyennes 30 minutes inférieures au second seuil, calcul de débit de polluant. Edition de courbes avec seuils.

Sur le rapport d'exploitation illustré par les figures 7a et 7b, l'opérateur peut vérifier le contenu de son arrêté d'exploitation, relatif à un polluant considéré et traduit de façon explicite. Il peut vérifier sur le tableau que comporte ce rapport, les exigences demandées par cette réglementation, à savoir la moyenne journalière qui doit être toujours inférieure à 100 mg/Nm³, le pourcentage de moyennes semi-horaires inférieures à 110 mg/Nm³,ainsi que la masse de polluant émis. Cet opérateur peut vérifier la durée de fonctionnement de l'installation de cogénération à laquelle s'applique ce rapport, ainsi que la durée de disponibilité de la mesure. La courbe qui figure sur le rapport (figure 7a) illustre les données du tableau de cette même figure 7a.

Le second rapport qui est illustré par la figure 7b est présenté avec des commentaires et l'affichage de tous les paramètres configurés qui ont un impact sur la mesure.

Les avantages apportés par le système objet de l'invention sont notamment les suivants :
- Fiabilité. En cas de problème informatique, les mesures brutes sont sauvegardées dans l'automate-enregistreur. L'opérateur peut visualiser ces mesures au niveau de l'automate.
- Concentration de tous les paramètres pouvant justifier un résultat analytique au niveau du même logiciel et du même ordinateur PC. La conversion des signaux, l'enregistrement des mesures et les traitements sont indépendants de tout autre système informatique.
- Réversibilité des traitements par changements de paramètres enregistrés dans les bases de données du système. Cette réversibilité permet de compenser d'éventuelles pannes des systèmes de mesures, tout en préservant la fiabilité et la transparence du système.
- Affichage en temps réel de la mesure corrigée qui sera utilisée dans le rapport final.
- Affichage rétroactif des mesures brutes et corrigées pour comprendre un dépassement.
- Présence de systèmes d'alarmes visuels déclenchés lors des dépassements et en cas d'invalidité des mesures.

Il demeure bien entendu que la présente invention n'est pas limitée aux exemples de réalisation et d'application décrits ici mais qu'elle en englobe toute les variantes.

## Revendications

1. Système de mesure et d'analyse en continu pour installations ou usines classées, notamment des installations émettant des polluants telles que des usines de combustion émettant des rejets gazeux qui comprend :
- des capteurs et des analyseurs délivrant des mesures brutes des données de fonctionnement de l'installation telles que notamment émission de polluants, sous la forme de signaux analogiques ;
- des moyens de traitement des signaux représentatifs des mesures brutes pour les transformer en mesures corrigées, notamment en vue de ramener les mesures aux conditions normales réglementaires ;
- des moyens de traitement et d'exploitation des mesures corrigées en vue d'éditer des rapports d'exploitation ;
ce système étant **caractérisé en ce qu'**il comprend :
- un automate-enregistreur (2) recevant les mesures brutes provenant des capteurs et des analyseurs (1), sous la forme de signaux analogiques et les transformant en signaux numériques avant de les enregistrer ;
- un ordinateur (3), relié à l'automate (2) par une liaison série (4), mettant en oeuvre un logiciel pour traiter les mesures brutes numérisées qui lui sont transmises par l'automate-enregistreur, cet ordinateur comportant trois bases de données :
■ une base de données de correction contenant tous les paramètres, configurables, servant à transformer les mesures brutes en mesures corrigées,
■ une base de données (base de données mesures) contenant les mesures brutes et corrigées,
■ une base de données (base de données rapports) contenant tous les paramètres, configurables, permettant d'éditer des rapports d'exploitation à partir des mesures corrigées ;
- et des moyens permettant d'éditer des rapports d'exploitation à partir des paramètres configurés et stockés dans la base de données rapports.

2. Système selon la revendication 1, **caractérisé en ce que** l'automate-enregistreur (2) comprend :
- un module d'acquisition recevant les signaux provenant des capteurs et analyseurs ;
- un module d'enregistrement et de conversion dans lequel les signaux analogiques provenant des capteurs et analyseurs sont échantillonnés puis convertis en signaux numériques représentant les mesures brutes, cette conversion étant effectuée d'après les paramètres de configuration adressés par le logiciel à l'automate et,
- une mémoire dans laquelle sont stockés les échantillons de mesures brutes devant être ensuite transférés, par la liaison série, audit ordinateur.

3. Système selon la revendication 2, **caractérisé en ce que** ledit automate-enregistreur comporte un panneau afficheur permettant d'afficher les mesures brutes, en temps réel.

4. Système selon la revendication 1, **caractérisé en ce que** le logiciel est conçu de façon à permettre l'affichage, en temps réel et en continu, des paramètres stockés dans la base de données de corrections, des données brutes et des données corrigées.

5. Système selon l'une des revendications 3 ou 4, **caractérisé en ce que** l'affichage des données comporte des systèmes d'alarme visuelle déclenchés lors de dépassement ou d'invalidation des mesures.

6. Système selon la revendication 2, **caractérisé en ce que,** lors de son transfert sur l'automate, l'échantillon de mesure peut être invalidé par le logiciel.

7. Système selon l'une quelconque des revendications précédentes, **caractérisé en ce que** les paramètres configurables et enregistrés dans la base de données rapports peuvent être modifiés à tout moment.

8. Système selon l'une quelconque des revendications précédentes, **caractérisé en ce que** les calculs, convertissant les mesures brutes en mesures corrigées peuvent être refaits à tout moment, à partir de nouvelles configurations de la base de données de corrections et à la demande de l'opérateur, sur une plage de temps configurable, les nouvelles mesures corrigées étant ensuite enregistrées dans la base de données mesures, à la place des anciennes mesures corrigées.

## Claims

1. Continuous measurement and analysis system for listed installations or factories, in particular installations emitting pollutants such as combustion factories emitting gaseous discharges, which comprises:
- sensors and analysers delivering raw measurements of the operating data of the installation such as in particular the emission of pollutants, in the form of analogue signals;
- means of processing the signals representing raw measurements in order to convert them into corrected measurements, in particular with a view to comparing the measurements with regulatory normal conditions;
- means of processing and using the corrected measurements with a view to publishing operating reports;
this system being **characterised in that** it comprises:
- a recording controller (2) receiving the raw measurements coming from the sensors and analysers (1) in the form of analogue signals, and converting them into digital signals before recording them;
- a computer (3), connected to the controller (2) by a serial link (4), using software for processing the digitised raw measurements which are transmitted to it by the recording controller, this computer comprising three databases:
■ a correction database containing all the configurable parameters serving to transform the raw measurements into corrected measurements,
■ a database (measurements database) containing the corrected raw measurements,
■ a database (reports database) containing all the configurable parameters, making it possible to publish operating reports from the corrected measurements;
- and means for publishing operating reports from the configured parameters stored in the reports database.

2. System according to claim 1, **characterised in that** the recording controller (2) comprises:
- an acquisition module receiving the signals coming from the sensors and analysers;
- a recording and conversion module in which the analogue signals coming from the sensors and analysers are sampled and then converted into digital signals representing the raw measurements, this conversion being made from the configuration parameters sent by the software to the controller, and
- a memory in which there are stored the raw measurement samples that are thereafter to be transferred, over the serial link, to the said computer.

3. System according to claim 2, **characterised in that** the said recording controller comprises a display panel for displaying the raw measurements, in real time.

4. System according to claim 1, **characterised in that** the software is designed so as to be permit the display, in real time and continuously, of the parameters stored in the corrections database, the raw data and the corrected data.

5. System according to one of claims 3 or 4, **characterised in that** the display of the data comprises visual alarm systems triggered when the measurements are exceeded or invalidated.

6. System according to claim 2, **characterised in that,** when it is transferred to the controller, the measurement sample may be invalidated by the software.

7. System according to any one of the preceding claims, **characterised in that** the configurable parameters recorded in the reports database may be modified at any time.

8. System according to any one of the preceding claims, **characterised in that** the calculations, converting the raw measurements into corrected measurements, may be redone at any time, from new configurations of the corrections database and at the request of the operator, over a configurable range of time, the new corrected measurements then being recorded in the measurements database in place of the old corrected measurements.

## Patentansprüche

1. Kontinuierlich arbeitendes Mess- und Analysesystem für registrierte Einrichtungen oder Fabriken, insbesondere Schadstoffe ausstoßende Einrichtungen, wie gasförmige Abfallstoffe ausstoßende Verbrennungsanlagen, aufweisend:
- Sensoren und Analysatoren, die Rohmesswerte hinsichtlich des Betriebs der Einrichtung, wie insbesondere Schadstoffausstoß, in Form von Analogsignalen liefern;
- Mittel zum Verarbeiten von die Rohmesswerte darstellenden Signalen, um diese in korrigierte Messwerte umzuwandeln, insbesondere zum Zwecke eines Zurückführens der Messwerte auf vorschriftsmäßige Normbedingungen;
- Mittel zum Verarbeiten und Auswerten der korrigierten Messwerte zum Zwecke einer Erstellung von Betriebsberichten;
wobei das System **dadurch gekennzeichnet ist, dass** es aufweist:
- einen Aufzeichnungsautomat (2), der die von den Sensoren und Analysatoren (1) stammenden Rohmesswerte in Form von Analogsignalen empfängt und vor der Aufzeichnung in Digitalsignale umwandelt;
- einen Rechner (3), der über eine serielle Verbindung (4) mit dem Automat (2) verbunden ist und der ein Programm zum Verarbeiten der durch den Aufzeichnungsautomat an ihn übertragenen digitalisierten Rohmesswerte ausführt, wobei der Rechner drei Datenbanken aufweist:
■ eine Korrekturdatenbank, die alle diejenigen konfigurierbaren Parameter enthält, die zum Umwandeln der Rohmesswerte in korrigierte Messwerte dienen,
■ eine Datenbank (Messwertdatenbank), die alle Rohmesswerte und korrigierten Messwerte enthält,
■ eine Datenbank (Berichtdatenbank), die alle konfigurierbaren Parameter enthält, die ein Erstellen von Betriebsberichten auf der Grundlage der korrigierten Messwerte ermöglichen;
- und Mittel, die ein Erstellen von Betriebsberichten auf der Grundlage der in der Berichtdatenbank konfigurierten und gespeicherten Parameter ermöglichen.

2. System nach Anspruch 1, **dadurch gekennzeichnet, dass** der Aufzeichnungsautomat (2) aufweist:
- ein Erfassungsmodul, das die von den Sensoren und Analysatoren stammenden Signale empfängt;
- ein Aufzeichnungs- und Umwandlungsmodul, in dem die von den Sensoren und Analysatoren stammenden Analogsignale abgetastet und anschließend in Digitalsignale umgewandelt werden, welche die Rohmesswerte darstellen, wobei die Umwandlung anhand derjenigen Konfigurationsparameter erfolgt, die das Programm dem Automaten zusendet und
- eine Speichereinheit, in der die Abtastwerte der Rohmesswerte gespeichert sind, die anschließend über die serielle Verbindung an den Rechner zu übertragen sind.

3. System nach Anspruch 2, **dadurch gekennzeichnet, dass** der Aufzeichnungsautomat eine Anzeigetafel aufweist, die ein Anzeigen der Rohmesswerte in Echtzeit ermöglicht.

4. System nach Anspruch 1, **dadurch gekennzeichnet, dass** das Programm dazu ausgebildet ist, kontinuierlich und in Echtzeit ein Anzeigen der in der Korrekturdatenbank gespeicherten Parameter, der Rohmesswerte und der korrigierten Messwerte zu ermöglichen.

5. System nach Anspruch 3 oder 4, **dadurch gekennzeichnet, dass** das Anzeigen der Daten visuelle Alarmsysteme beinhaltet, die beim Überschreiten oder Annullieren von Messwerten auslösen.

6. System nach Anspruch 2, **dadurch gekennzeichnet, dass** der abgetastete Messwert bei seiner Übertragung auf den Automaten durch das Programm annulliert werden kann.

7. System nach einem der vorangehenden Ansprüche, **dadurch gekennzeichnet, dass** die konfigurierbaren, in der Berichtdatenbank gespeicherten Parameter jederzeit modifiziert werden können.

8. System nach einem der vorangehenden Ansprüche, **dadurch gekennzeichnet, dass** die Rohmesswerte in korrigierte Messwerte umwandelnden Berechnungen auf der Grundlage neuer Konfigurationen der Korrekturdatenbank und auf Anforderung einer Bedienperson innerhalb eines konfigurierbaren Zeitbereichs jederzeit wiederholt werden können, wobei die neuen korrigierten Messwerte anschließend an Stelle der ursprünglichen korrigierten Messwerte in der Messwertdatenbank gespeichert werden.
